# EUROPEAN PATENT APPLICATION

(11) **EP 3 048 482 A2**
(43) Date of publication of application: **27.07.2016**
(21) Application number: 14834858.4
(22) Date of filing: 07.08.2014
(51) Int. Cl.: G03B 21/14, G03B 35/00

(54) **PROJECTOR PROVIDED WITH HOLOGRAM SCREEN**

(30) Priority: 07.08.2013 KR 20130093564; 04.09.2013 KR 20130106358; 06.08.2014 KR 20140100925
(71) Applicant: Lee, Jeong Yong, Hanam-si, Gyeonggi-do 465-831 (KR)
(72) Inventor: Lee, Jeong Yong, Hanam-si, Gyeonggi-do 465-831 (KR)
(74) Representative: Cabinet Chaillot
(86) International application number: PCT/KR2014/007338
(87) International publication number: WO 2015/020462

(57) **Abstract**

The purpose of the present invention is to project a hologram screen to one of a variety of projectors by adjusting the hologram screen to an image size of the one of the variety of projectors so as to approximately correspond to each other so that the hologram screen is formed in front of the one of the variety of projectors, and a hologram projector is separately turned on or off for general use.

## Description

### Technical Field

The present invention generally relates to hologram technology.

### Background Art

The present invention generally relates to a projector provided with a hologram screen. In general, there are various type screens including a tripod screen, a wall-hanging screen, and a white screen.

Recently, holo (whole) graphy (writing) technology has been utilized in a variety of fields, and the term holography is widely known. However, the principle of holography has been known for over 70 years. In 1948, Dennis Gabor invented holography technology for improving the resolving power of an electron microscope.

A holographic image is used to display a fully three-dimensional image, which is seen without the aid of special glasses since the holographic image is produced by recording an object at 360 degree angles.

The holographic image is made by using a laser, which is diffracted when the laser encounters an object. An image produced by diffracting the laser contains a three-dimensional image of the object. The image is then recorded, and when the original laser is incident, the recorded three-dimensional image is reproduced.

Diffraction occurs when a wave reaches an area, which the wave as a particle cannot reach, by being curved.

The current technology of a holographic image may realize a frame level as a still image, and the holographic image is utilized for advertisement, performance, and public relations displays. As a similar holographic image, a 20 inch (approximately 50.8 centimeters) sized image has been realized abroad.

### Holographic Memory

Holographic memory is technology for recording and reproducing a large amount of digital information or a digital image by using holography technology. Holography is a technology in which a three-dimensional object image is recorded in a two-dimensional recording medium, and since light strength and a light phase as a wave are recorded, a three-dimensional image may be produced. Unlike an existing method in which brightness information of specific coordinates is stored as individual bits, a holographic memory approach uses a page-oriented method of recording the whole information of a plane in a point. This kind of point information having two-dimensional information of an object is pollygonally collected and stored by using a rotating mirror, and thus a three-dimensional world with a large volume may be stored. Holographic memory may read and write data 150 times speed faster than a digital video disk (DVD) and at large terabyte levels.

A laser that is incident on a beam splitter is divided into a reference beam and an object beam. The object beam is modulated as a page unit of binary data of light and shade comprising pixels by using a spatial light modulator (SLM) depending on input data. In this case, the reference beam that slightly changes an angle of the rotating mirror is correspondingly recorded in each page. Further, the object beam interferes with the reference beam inside a storage medium, and light-induced phenomenon of mobile charge inside the storage medium occurs depending on strength of an occurring interference fringe. Thus, the interference fringe is recorded through the above process. In order to read data recorded in the storage medium, only the reference beam illuminates the storage medium, and the interference fringe diffracts the reference beam. Thus, the interference fringe is restored as a check pattern comprising the original light and shade of the pixels. Further, an image that has been read illuminates a charge coupled device (CCD), and the original data is restored. In this case, it is necessary that an angle of each reference beam is adjusted so as to be identical with the angle of each reference beam when recording by using the rotating mirror. As described above, since it is necessary that the reference beam when reproducing is exactly identical with the reference beam when recording, angle resolution of a device operated in conjunction with the rotating mirror requires a strict accuracy degree.

The accuracy degree significantly depends on thickness of crystal that is a storage material, and as the thickness of crystal is increased, a higher accuracy degree is required. When the thickness of crystal is one centimeter, an illumination angle of the reference beam by the rotating mirror when reproducing is inclined at one-thousandth degree angle (an angle of 1/1000 degree) compared to an illumination angle of the reference beam when recording, and thus, a reproduction image will completely disappear. When recording, after the first page of the data is recorded in the crystal, the angle of the reference beam is increased until a reproducing image of the first hologram completely disappears, and a new data page is recorded in the crystal by inputting the new data page. The process is called angle multiplexing, and the data is recorded inside the crystal in an overlapping manner by repeating the process.

A real hologram was first produced in 2006 in Japan. The real hologram demonstrated is configured such that a single color image floating in the air may be reproduced to show about 10 to 15 frames per second. In this case, approximately 50,000 light beams illuminate the air, and a three-dimensional image produced by using the approximately 50,000 light beams is shown. In current technology, an image showing about 24 to 30 frames per second, which is approximate to an actual object, is possible. However, it appears that there is a long way to go for producing a true color image.

Other than the real hologram, another technology, in which an image floats in the air, is already utilized for commercial use in the United States.

A heliodisplay is a method in which jet vapor is sprayed in the air in a similar manner with an ultrasonic humidifier and an image is projected on the jet vapor. In this case, when three-dimensional content is projected, the content appears three-dimensional and is considerably realistic. However, it is problematic in that the image may be properly viewed only when viewed from the front of the image. Further, it is also problematic in that water is always required because a vapor generation device is used and thus the heliodisplay may be viewed only in a designated place. However, recently, the heliodisplay has been increasingly utilized in fashion shows, musical performances, or the like, since the heliodisplay does not block a space unlike glass membrane or transparent film.

In the present invention, an image is simply reproduced without installing a projector table, bracket, screen, or projector lamp, but in such a way that a hologram screen is formed in front of one of a variety of projectors.

### Disclosure

### Technical Problem

Accordingly, the present invention has been made keeping in mind the above problems occurring in the related art, and the present invention is intended to propose a projector provided with a hologram screen in which an image is simply reproduced without installing a projector table, bracket, screen, or projector lamp, but in such a way that a hologram screen is formed in front of one of a variety of projectors.

### Technical Solution

In order to achieve the above object, according to one aspect of the present invention, there is provided a projector provided with a hologram screen that is integrally formed with one of a variety of projectors projects a screen image, and thus an image is simply reproduced.

### Advantageous Effects

The present invention is advantageous in that a projector provided with a hologram screen that is integrally formed with one of variety of projectors projects a screen image and thus an image is simply reproduced in front of the one of the variety of projectors outdoors at night or in a car without installing a projector table, bracket, screen, or projector lamp.

### Description of Drawings

Fig. 1 is a schematic view of illustrating a projector provided with a hologram screen; and
Fig. 2 is a view illustrating that hologram screens are thickly shown in such a way that the hologram screens are sequentially formed at predetermined time intervals.

### <Description of the Reference Numerals in the Drawings>

50: hologram screen
51: projector (general or laser)
52: hologram projector
55: time interval multiscreen

### Best Mode

A projector provided with a hologram screen is configured in such a way that the projector projects a hologram screen to one of a variety of projectors by adjusting the hologram screen to an image size of the one of the variety of projectors so as to approximately correspond to each other, the hologram screen being formed by a hologram reproducer for reproducing a recorded hologram screen by radiating a reference beam on a hologram recording medium in which an image of the hologram screen is stored. Further, the projector is configured such that one of a variety of projectors is integrally formed with a hologram projector in which the hologram reproducer only is formed. Further, hologram screens are thickly shown in such a way that the hologram screens are sequentially produced at predetermined minute time intervals from the closest position to the farthest position based on the projector. Further, depending on an imaging angle of a general projector or laser projector, the hologram screens become gradually larger from the closest position to the farthest position based on the general projector or laser projector, that is, from a small sized screen to a large sized screen such that the hologram screens closely fit the image size of the one of the variety of projectors. Further, the hologram screens are reproduced in such a way that the hologram screens stored in the hologram memory unit or the hologram screens recorded in the hologram recording medium are used such that a rear surface of the last hologram screen of the hologram screens is formed in black and a front surface of the first hologram screen of the hologram screens is formed as a white lamp. Further, a three-dimensional image is reproduced by projecting a three-dimensional content on the hologram screen produced by using a laser projector.

### Mode for Invention

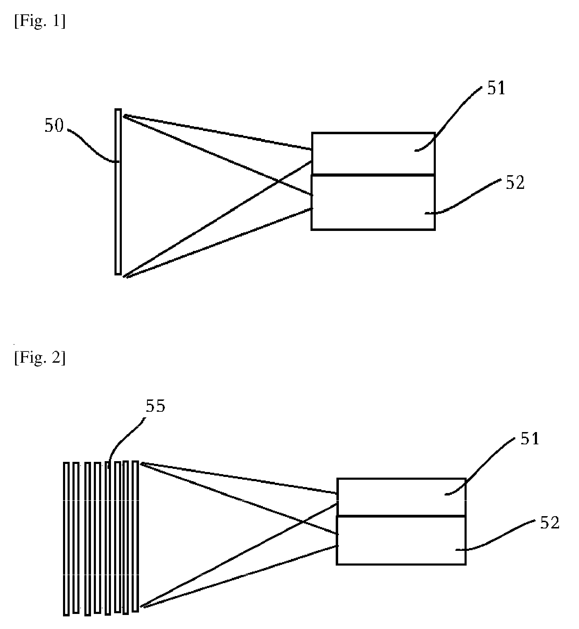

Hereinafter, embodiments of the present invention are described in detail with reference to the accompanying drawings. Fig. 1 is a schematic view of illustrating a projector provided with a hologram screen according to the present invention. The projector projects a hologram screen by adjusting a hologram projector, in which a screen image is stored, to an image size of one of the variety of projectors so as to correspond to each other so that the hologram screen is formed in front of the one of the variety of projectors. A color of the hologram screen is controlled so that a clear desired color is displayed by using a general projector or laser projector, and the hologram screen recorded in a recording medium is used. For reference, when a white screen is mixed with a general projector in red, a bright red screen is generated.

Therefore, screen brightness may be controlled depending on a hologram screen color, and hologram screen brightness may be controlled by controlling brightness of a general projector or laser projector without changing the hologram screen brightness.

Furthermore, a rear surface of the hologram screen may be formed in black and a front surface of the hologram screen may be formed as a white lamp so that the rear surface of the hologram screen is prevented from being transparent.

Fig. 2 is a view illustrating that the hologram screens shown in Fig. 1 are thickly shown in such a way that the hologram screens are sequentially formed at predetermined time intervals. A heliodisplay is a method in which jet vapor is sprayed in the air in a similar manner with an ultrasonic humidifier and an image is projected on the jet vapor. In this case, when a three-dimensional content is projected, the content appears three-dimensional and considerably realistic.

In the present invention, the hologram screens are thickly shown in such a way that the hologram screens are sequentially formed at predetermined time intervals instead of using the heliodisplay.

### Industrial Applicability

Considering current hologram technology, although it appears that there is a long way to go before a three-dimensional image is freely produced, current hologram technology still can be utilized in various fields.

## Claims

1. A projector provided with a hologram screen, wherein the projector is configured in such a way that the projector projects a hologram screen (50) by adjusting the hologram screen to an image size of one of a variety of projectors (51) so as to approximately correspond to each other, the hologram screen being formed by a hologram reproducer for reproducing a stored hologram screen by radiating a reference beam on a hologram as a screen image stored in a hologram memory unit by a hologram storage unit or the hologram screen being formed by the hologram reproducer for reproducing a recorded hologram screen by radiating a reference beam on a hologram recording medium in which an image of the hologram screen is stored so that the hologram screen is formed in front of the one of the variety of projectors.

2. The projector of claim 1, wherein the one of the variety of projectors is integrally formed with a hologram projector (52) in which a combined hologram recording medium and hologram reproducer, or the hologram reproducer only is formed.

3. The projector of claim 1 or 2, wherein the hologram projector is turned on concurrently with the one of the variety of projectors.

4. The projector of any one of claims 1 to 3, wherein the hologram projector is turned on or off separately from the one of the variety of projectors so that the hologram projector is generally used.

5. The projector of any one of claims 1 to 4, wherein when a screen is formed by reproducing the hologram with a laser, projection of a required sized screen is realized by storage of various sized screens, and thus a size of a virtual image of the screen is adjusted.

6. The projector of any one of claims 1 to 5, wherein when the screen is formed by projecting the hologram with the laser, projection of a screen having a required distance from the hologram projector to the screen is realized by storage of screens having respective various distances from the hologram projector to the screen, and thus a distance from the hologram projector to the screen is adjusted.

7. The projector of any one of claims 1 to 6, wherein hologram screens are thickly shown in such a way that the hologram screens are sequentially formed at predetermined minute time intervals from a closest position to a farthest position based on the projector.

8. The projector of claim 7, wherein the hologram screens are thickly shown in such a way that the hologram screens are sequentially formed at predetermined minute time intervals from the closest position to the farthest position based on the projector, and depending on an imaging angle of a general projector or laser projector, the hologram screens become gradually larger from a closest position to a farthest position based on the general projector or laser projector, that is, from a small sized screen to a large sized screen such that the hologram screens closely fit the image size of the one of the variety of projectors.

9. The projector of any one of claims 1 to 8, wherein thick screens comprising points are formed by projecting a plurality of light beams onto air in the hologram screen.

10. The projector of any one of claims 1 to 9, wherein a three-dimensional image is produced by projecting a three-dimensional content on the hologram screen produced in such a way that a combined general projector and hologram projector, a combined laser projector and hologram projector, or a projector only comprising the hologram projector is used.

11. The projector of any one of claims 1 to 10, wherein the hologram is made by a multiplexing system selected from a group including angle multiplexing, fractal multiplexing, peristrophic multiplexing, shift multiplexing, phase-code multiplexing, wavelength multiplexing, and a combination thereof.

12. The projector of any one of claims 1 to 11, wherein the projector other than the hologram projector is a general projector or a laser projector.

13. The projector of any one of claims 1 to 12, wherein the projector comprises the hologram projector only.

14. The projector of any one of claims 1 to 13, wherein to prevent a rear surface of the hologram screen from being transparent, when a single hologram screen is formed, the hologram screen is reproduced in such a way that the hologram screen stored in the hologram memory unit or the hologram screen recorded in the hologram recording medium is used such that the rear surface of the hologram screen is formed in black and a front surface of the hologram screen is formed as a white lamp so that the rear surface of the hologram screen is prevented from being transparent, and
when a plurality of hologram screens are formed, the hologram screens are reproduced in such a way that the hologram screens stored in the hologram memory unit or the hologram screens recorded in the hologram recording medium are used such that a rear surface of a last hologram screen of the hologram screens is formed in black and a front surface of a first hologram screen of the hologram screens is formed as a white lamp so that the rear surface of the last hologram screen is prevented from being transparent.
